# EUROPÄISCHE PATENTSCHRIFT

(11) **EP 2 883 625 B1**
(45) Veröffentlichungstag und Bekanntmachung des Hinweises auf die Patenterteilung: **29.11.2017**
(21) Anmeldenummer: 14738241.0
(22) Anmeldetag: 13.02.2014
(51) Int. Cl.: B07C 5/34

(54) **GLASFASERLASER-SORTIERER**
OPTICAL FIBER LASER SORTER
APPAREIL DE TRI LASER À FIBRE OPTIQUE

(30) Priorität: 24.12.2012 RU 2012156324
(43) Veröffentlichungstag der Anmeldung: 17.06.2015
(73) Patentinhaber: Chujko, Grigorij Vladimirovich, g. Voronezh 394018 (RU)
(72) Erfinder: CHUJKO, Grigorij Vladimirovich, g. Voronezh 394018 (RU); SHULGIN, Vladimir Alekseevich, g. Voronezh 394051 (RU); BABISHOV, Jelnur Megralievich, g. Voronezh 394070 (RU); GOLDFARB, Vladimir Abramovich, g. Voronezh 394068 (RU); MINAKOV, Dmitry Anatolievich, g. Voronezh 394083 (RU); PAHOMOV, Gennadij Vladimirovich, g. Voronezh 394005 (RU); SOKOLOVA, Olga Vladimirovna, g. Voronezh 394087 (RU); STRYGIN, Vladimir Dmitrievich, g. Voronezh 394068 (RU); CHURIKOV, Anatolij Alekseevich, g. Voronezh 394053 (RU)
(74) Vertreter: Sloboshanin, Sergej
(86) Internationale Anmeldenummer: PCT/RU2014/000094
(87) Internationale Veröffentlichungsnummer: WO 2014/109679

(56) Entgegenhaltungen:
- WO-A1-2009/030004
- RU-C- 1 809 921
- RU-C- 2 172 019
- US-A1- 2010 046 826
- US-A1- 2012 038 915

## Beschreibung

Die angemeldete Erfindung betrifft eine faseroptische Laser-Sortiervorrichtung gemäß dem Oberbegriff des Anspruchs 1 und kann verwendet werden in Vorrichtungen zum Sortieren von Gegenständen nach Farbe, Größe, Form und anderen Eigenschaften, die für eine Analyse mit Mitteln der maschinellen Erfassung geeignet sind. Der Hauptanwendungsbereich ist die Sortierung landwirtschaftlicher Erzeugnisse.

Es sind Scanner-Laser-Sortiervorrichtungen bekannt (US-Patent 6,509,537 B1 vom 21. Januar 2003, US-Patent 6,864,970 B1 vom 8. Mai 2005), die eine Einrichtung zum Transport des zu sortierenden Materials, eine Einrichtung zum Lesen der Abbildung, eine Einrichtung zum Bearbeiten der Abbildung und eine Einrichtung zum Entfernen defekter Materialien umfasst. Die Transporteinrichtung ermöglicht die kontinuierliche Zufuhr des Materials in den Bereich zum Lesen der Abbildung sowie in den Wirkungsbereich der Einrichtung zum Entfernen defekter Materialien. Nach dem Lesen wird die Abbildung des Produkts durch die Einrichtung zum Bearbeiten der Abbildung auf eines oder mehrere der folgenden Merkmale analysiert: Farbe, Struktur, Form des Gegenstands. Diejenigen Gegenstände, bei denen die Werte der gelesenen Merkmale wesentlich von den vorher bestimmten Werten abweichen, werden von der Einrichtung zum Entfernen defekter Materialien, die üblicherweise aus einem Feld von Luftdüsen besteht, aus dem Ausgangsstrom entfernt. Die Beleuchtung des Lesebereichs der Abbildung der Sortiervorrichtung erfolgt unter Verwendung eines mechanischen Strahlablenkungssystems. Ein Bündel von Laserstrahlen aus einer Quelle wird durch einen halbtransparenten Spiegel auf ein schnell drehendes Prisma mit spiegelnden Oberflächen geleitet. Durch die Drehung des Prismas erfolgt eine Ablenkung des Laserstrahls auf den gesamten Scanbereich der Abbildung. Das Licht, das von dem Material reflektiert wird, das den Lesebereich durchläuft, wird von dem drehenden Spiegel reflektiert und auf Lichtdetektoren gerichtet. Ein Signal von den Lichtdetektoren wird in das System zum Bearbeiten der Abbildung geleitet, das die Eignung des Produkts prüft und Signale an die Einrichtung zum Entfernen defekter Materialien sendet. Der Vorteil des Systems liegt darin, dass es eine gleichzeitige Nutzung mehrerer Laserlichtquellen verschiedener Frequenzen erlaubt. Zu den allgemeinen Nachteilen solcher Systeme zählt das Folgende: Erstens ist es zum Erzielen einer hohen Produktivität der Sortierung notwendig, dass der Laserstrahl den Lesebereich der Abbildung 2000-5000 Mal pro Sekunde scannt, was sehr hohe Drehzahlen des Spiegelprismas erfordert. Zweitens können die Lichtdetektoren nicht die hohe Auflösungsfähigkeit erreichen, die zum Scannen kleiner Materialien (1-5 mm) notwendig ist. Drittens führt das komplexe optische System dazu, dass kleinste Störungen in der Anordnung der optischen Elemente einen Ausfall des gesamten Systems bewirken können.

Der bezüglich der Gesamtheit der Merkmale nächstgelegene Stand der Technik ist eine Scanner-Laser-Sortiervorrichtung, die in dem Patent US 2010/0046826 A1 vom 25. Februar 2010 beschrieben ist. Hier ist der drehende Spiegel nur für die Ablenkung des Laserstrahls vorgesehen und hat keine Funktion zum Umlenken des reflektierten Lichts zu den Lichtdetektoren. Das ermöglicht eine wesentliche Vereinfachung des optischen Systems des Geräts. Die Funktion der Einheit für die Photoaufzeichnung der Abbildung übernimmt eine Videokamera mit Linearbildsensor, was die Auflösungsfähigkeit der Vorrichtung wesentlich verbessert.

Bei dieser bekannten Vorrichtung ist es ebenfalls erforderlich, eine hohe Drehzahl des Spiegelprismas und eine hohe Genauigkeit der beweglichen mechanischen Einheiten zu erzielen, um eine Unveränderbarkeit des Aufbaus des optischen Systems zu erreichen. Das verringert die Zuverlässigkeit des Aufbaus und schränkt seinen Anwendungsbereich ein. Außerdem ist bei dieser Vorrichtung keine gleichzeitige Nutzung mehrerer Laserstrahlungsquellen mit verschiedenen Frequenzen vorgesehen. Das hängt mit den technischen Schwierigkeiten bei der Kongruenz der Scanlinien der räumlich versetzten Lichtleiterbündel zusammen.

Die angemeldete Erfindung ist zum Sortieren von landwirtschaftlichen Produkten nach Farbe, Größe, Form und anderen Eigenschaften vorgesehen, die für eine Analyse mit Mitteln der maschinellen Erfassung geeignet sind. Durch die Anwendung der angemeldeten Erfindung kann der Informationsgehalt der aufzuzeichnenden Abbildung wesentlich erhöht, die Konstruktion der Sortiervorrichtung vereinfacht, ihre Zuverlässigkeit erhöht und die Herstellungskosten gesenkt werden. Bei der bekannten Vorrichtung geschieht der Aufbau der Abbildung durch Übereinstimmung zweier dynamischer Prozesse: der gerichteten Bewegung des Produkts und der periodisch wiederholten Bewegung des Laserlichtstrahls, die durch den beweglichen Spiegel erzeugt wird. Bei der angemeldeten Erfindung ist das Laserlicht in Form eines flachen Bündels ständig in dem gesamten Abbildungserzeugungsbereich vorhanden. Außerdem steigt bei gleicher Belichtung der Abbildungsaufzeichnung und dementsprechend bei gleicher Strahlungsleistung der Laserlichtquellen die kurzzeitige Dichte der auf das Produkt einwirkenden Leistung in der Scanner-Sortiervorrichtung um ein Vielfaches an. Das kann zu einer Beschädigung des Produkts führen. Bei der angemeldeten Erfindung ist im Gegensatz zu der bekannten Vorrichtung die Laserlichtstrahlung über die gesamte Öffnung des sich bewegenden Stroms verteilt. Bei unveränderter Belichtungszeit sinkt die Leistungsdichte erheblich. Das Fehlen von sich bewegenden optischen Elementen, die Zuverlässigkeit, die einfache Herstellung und die geringen Kosten sind wesentliche Vorteile der angemeldeten Erfindung. Außerdem ermöglicht bei der angemeldeten Erfindung das optische System der vereinigten Laserstrahlung verschiedener Frequenzen mit Hilfe der optischen Faser die Ausbildung einer einzigen Strahlungsquelle und die Erzeugung einer linearen Ablenkung aller Spektralbereiche des gesamten optischen Systems. Dadurch wird eine hohe Genauigkeit der räumlichen Übereinstimmung der Strahlung verschiedener Quellen ermöglicht.

Das technische Ergebnis wird bei der angemeldeten Erfindung dadurch erreicht, dass eine bekannte Laser-Sortiervorrichtung, die eine Einrichtung zum Transport des zu sortierenden Materials, eine Einrichtung zur Laserbeleuchtung des zu sortierenden Materials, eine Einrichtung zum Ablenken des Laserbündels, eine Einrichtung zum Lesen und Bearbeiten der Abbildung und eine Einrichtung zum Entfernen defekter Materialien umfasst, erfindungsgemäß zusätzlich eine optische Faser umfasst, deren Eingang durch eine fokussierende Optik mit den Lichtausgängen eines oder mehrerer Laser verbunden ist, während der Ausgang der optischen Faser mit der fokussierenden und zylindrischen Optik der Einrichtung zum Ablenken des Laserbündels verbunden ist.

Die faseroptische Laser-Sortiervorrichtung umfasst nach einer Ausführungsform zwei und mehr Einrichtungen zum Lesen und Bearbeiten der Abbildungen, die sowohl auf das Lesen des reflektierten und des durch das Material hindurchgehenden Laserlichts als auch auf das Lesen in verschiedenen Spektralbereichen gerichtet sind. Die Verwendung von Laserstrahlung zur Beleuchtung des sich bewegenden Produkts bewirkt insbesondere eine wesentliche Verstärkung der Beleuchtung des Bereichs, in dem die Abbildung erzeugt wird, und entsprechend eine Verkürzung der Expositionszeit mit dem Ziel einer Erhöhung der Auflösung der erzeugten Abbildung durch eine Erhöhung der Scanfrequenz des Linearvideosensors. Bei der bekannten Vorrichtung ist die Scanfrequenz des Linearvideosensors synchron zu der Frequenz der Ablenkung des Laserstrahls und somit durch die Eigenschaften des mechanischen Scanners begrenzt. Die starke Beleuchtung ermöglicht die Erzielung verhältnismäßig kurzer Expositionszeiten sowohl bei der Aufzeichnung des durch das Produkt hindurchgehenden Lichts oder bei Fluoreszenzlicht, was es ermöglicht, bei hoher Produktivität des Sortierens gleichzeitig mit verschiedenen Leseeinrichtungen das reflektierte und das hindurchgehende Signal aufzuzeichnen. Dabei können die Leseeinrichtungen ihre Funktionen gleichzeitig in verschiedenen Spektralbereichen erfüllen. Das erweitert die funktionalen Fähigkeiten der angemeldeten Laser-Sortiervorrichtung im Vergleich zu der bekannten Vorrichtung.

Die faseroptische Laser-Sortiervorrichtung umfasst nach einer Ausführungsform zusätzlich Modulatoren für die Laserlichtintensität. In diesem Fall können in einem Sortierzyklus Abbildungen in verschiedenen Spektralbereichen erzeugt und mit einem Breitband-Linearvideosensor aufgezeichnet werden. Der geringe Nachlauf der Laserlichtsteuerung ermöglicht es, entsprechend der Bewegung des Produkts die Beleuchtung in einem Bereich abzuschalten und die Beleuchtung in einem anderen Bereich einzuschalten, wobei dieser Prozess mit der Zeilenfrequenz der Videokamera synchronisiert wird, die mit dem linearen Videosensor ausgestattet ist. Die weitere rechnerische Bearbeitung ermöglicht die Erzeugung mehrerer Abbildungen in verschiedenen Spektralbereichen mit Hilfe einer einzigen Videokamera. Die gemeinsame Bearbeitung der Abbildungen in verschiedenen Spektralbereichen erweitert die funktionalen Möglichkeiten der Analyse des zu sortierenden Produkts erheblich. Bei den bekannten Sortiervorrichtungen wird diese Aufgabe mit Hilfe mehrerer Videokameras gelöst.

Die faseroptische Laser-Sortiervorrichtung zeichnet sich erfindungsgemäß dadurch aus, dass der Eingang der optischen Faser über eine fokussierende Optik und drehende Prismen mit den Lichtausgängen eines oder mehrerer Laser verbunden werden kann. Diese technische Lösung ermöglicht es, die räumliche Anordnung der mehreren Laserquellen zu vereinfachen, wobei der kleine Einfallswinkel der Strahlung in die optische Faser erhalten bleibt. Dieser Winkel darf die Größe des Öffnungswinkels des optischen Wellenleiters nicht übersteigen, und außerdem muss dieser Winkel minimiert werden, um die Verluste beim Einfall der Strahlung in den Wellenleiter zu verringern.

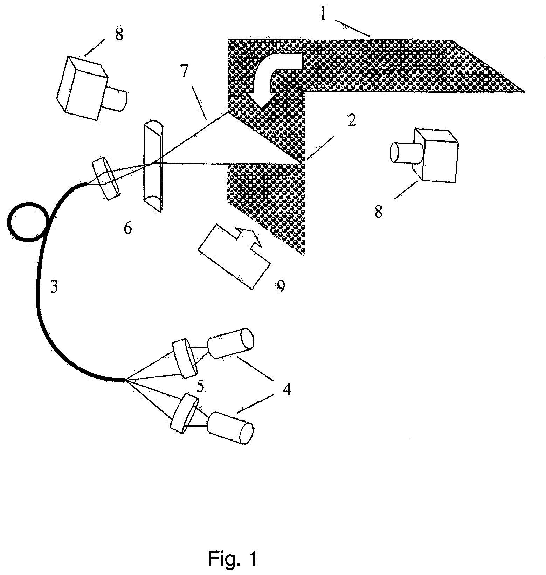

Fig. 1 zeigt schematisch die Laser-Sortiervorrichtung. Die Einrichtung 1 zum Transport des zu sortierenden Materials fördert das Produkt in die Laserlichtzone 2. Die Laserlichteinrichtung besteht aus einer optischen Faser 3 und einem oder mehreren Lasern 4, deren Lichtausgänge über die fokussierende Optik 5 mit dem Eingang der optischen Faser verbunden sind. Das Ausgangsende der optischen Faser ist mit der fokussierenden und zylindrischen Optik der Einrichtung zur Ablenkung des Laserbündels 6 verbunden. Die zylindrische Optik bildet ein ebenes Lichtbündel 7, das den Lesebereich der Abbildung des zu sortierenden Materials beleuchtet, die fokussierende Optik bildet die Breite der Beleuchtungslinie in dem Bereich der Abbildungsaufzeichnung. Die Einrichtung 8 zum Lesen und Bearbeiten der Abbildung analysiert die Abbildung und erzeugt nach vorher bestimmten Kriterien Steuerungssignale, die zu der Einrichtung 9 geleitet werden. Die Einrichtung 9 führt die Entfernung defekter Materialien durch.

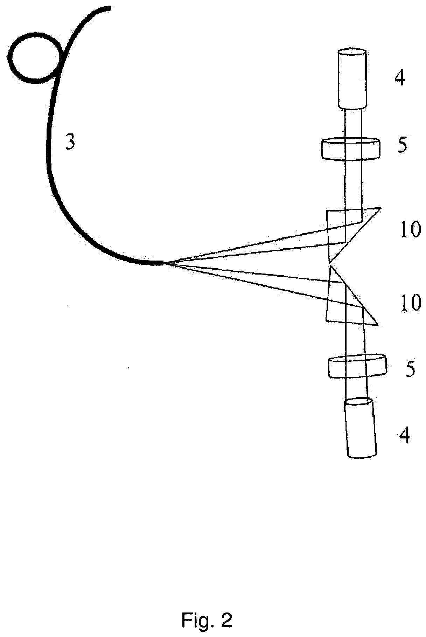

Fig. 2 zeigt schematisch die Einführung der Strahlung in den Wellenleiter der faseroptischen Laser-Sortiervorrichtung, bei der der Eingang der optischen Faser über die fokussierende Optik und die drehenden Prismen 10 mit den optischen Ausgängen eines oder mehrerer Laser verbunden sind.

Die Arbeit der Laser-Sortiervorrichtung geschieht folgendermaßen. Die Einrichtung 1 zum Transport des zu sortierenden Materials fördert das Produkt auf beliebige Art - mit Hilfe eines Förderbands, eines Vibrationsförderers mit Rutsche oder mit anderen Mitteln - aus dem Speicher in den Laserlichtbereich 2. Der fallende oder sich bewegende Produktstrom ist bezüglich der Breite durch die Öffnung der aufzuzeichnenden Abbildung und bezüglich des Sehstrahls durch die Tiefenschärfe des Objektivs der Leseeinrichtung beschränkt. Die Strahlung eines oder mehrerer Laser 4 wird durch die fokussierende Optik 5 auf das Eingangsende der optischen Faser 3 projiziert. Die Strahlung des Ausgangsendes der optischen Faser 3 wird durch die fokussierende und zylindrische Optik 6 in Form eines planen Lichtbündels 7 auf die Ebene des Aufzeichnungsbereichs der Abbildung 2 projiziert. Die zylindrische Optik der Einrichtung zum Ablenken des Laserbündels wird so berechnet, dass der zu beleuchtende Bereich mit dem Bereich der Aufzeichnung der Abbildung durch die Einrichtung 8, die den Linearvideosensor aufweist, zusammenfällt. Die ungleichmäßige Intensität in dem Beleuchtungsbereich kann in der Phase der Erzeugung und Bearbeitung des Videosignals in der Einrichtung 8 kompensiert werden. Die Einrichtung 8 zum Lesen und Bearbeiten der Abbildung trifft in einer Zeit, die die Zeit nicht überschreitet, in der das Produkt den Weg von dem Bereich der Aufzeichnung der Abbildung zu der Einrichtung zum Entfernen defekter Materialien zurücklegt, eine Entscheidung über das Entfernen des mangelhaften Produkts. Die Einrichtung 8 erzeugt in der berechneten Zeit die Adresse der räumlichen Lage des zu entfernenden Objekts und betätigt die Einrichtung 9 zum Entfernen defekter Materialien. Die drehenden Prismen 10 ermöglichen eine Begrenzung des Winkelspektrums der in den optischen Wellenleiter eingeführten Strahlung und ermöglichen darüber hinaus eine Vereinfachung der Aufgabe der räumlichen Anordnung der Laser und der optischen Elemente, die die Ablenkung des Laserbündels bewirken.

## Patentansprüche

1. Faseroptische Laser-Sortiervorrichtung, umfassend eine Einrichtung (1) zum Transport des zu sortierenden Materials, eine Einrichtung für eine Laserbeleuchtung des zu sortierenden Materials, eine Einrichtung zum Ablenken des Laserbündels, eine Einrichtung (8) zum Lesen und Bearbeiten der Abbildung, eine Einrichtung (9) zum Entfernen defekter Materialien, **dadurch gekennzeichnet, dass** die Einrichtung für die Laserbeleuchtung zusätzlich eine optische Faser (3) aufweist, deren Eingang über eine fokussierende Optik (5) mit den optischen Ausgängen eines oder mehrerer Laser (4) verbunden ist, während der Ausgang der optischen Faser (3) mit einer fokussierenden und zylindrischen Optik (6) der Einrichtung zum Ablenken des Laserbündels verbunden ist.

2. Faseroptische Laser-Sortiervorrichtung nach Anspruch 1, **dadurch gekennzeichnet, dass** sie zwei und mehr Einrichtungen (8) zum Lesen und Bearbeiten der Abbildungen aufweist, die sowohl auf das Lesen des reflektierten und des durch das Material hindurchgehenden Laserlichts (7) als auch auf das Lesen in verschiedenen Spektralbereichen gerichtet sind.

3. Faseroptische Laser-Sortiervorrichtung nach Anspruch 1, **dadurch gekennzeichnet, dass** sie zusätzlich Modulatoren für die Laserlichtintensität aufweist.

4. Faseroptische Laser-Sortiervorrichtung nach Anspruch 1, **dadurch gekennzeichnet, dass** der Eingang der optischen Faser (3) über die fokussierende Optik (5) und die drehenden Prismen (10) mit den optischen Ausgängen eines oder mehrerer Laser (4) verbunden ist.

## Claims

1. Fibre optical laser sorting apparatus comprising a device (1) for transporting the material to be sorted, a device for laser illumination of the material to be sorted, a device for deflecting the laser bundle, a device (8) for reading and processing of the image, a device (9) for removing defective materials, **characterised in that** the device for laser illumination additionally comprises an optical fibre (3) whose entry is connected to the optical exits of one or several lasers (4) via a focussing optics (5), while the exit of the optical fibre (3) is connected to a focussing and cylindrical optics (6) of the device for deflecting the laser bundle.

2. Fibre optical laser sorting apparatus according to claim 1, **characterised in that** it comprises two and more devices (8) for reading and processing the images, which are suitable for reading the laser light (7) that is reflected and that goes through the material, as well as for reading in various spectral ranges.

3. Fibre optical laser sorting apparatus according to claim 1, **characterised in that** it additionally comprises modulators for the laser light intensity.

4. Fibre optical laser sorting apparatus according to claim 1, **characterised in that** the entry of the optical fibre (3) is connected to the optical exits of one or several lasers (4) via the focussing optics (5) and the rotating prisms (10).

## Revendications

1. Appareil de tri laser à fibre optique, comprenant un dispositif (1) de transport du matériau à trier, un dispositif d'éclairage laser du matériau à trier, un dispositif de balayage du faisceau laser, un dispositif (8) de lecture et de traitement d'image, et un dispositif (9) pour enlever des matériaux défectueux, **caractérisé en ce que** le dispositif d'éclairage laser comprend en plus une fibre optique (3), dont l'entrée est reliée aux sorties optiques d'un ou plusieurs lasers (4) par l'intermédiaire d'un dispositif optique de focalisation (5), tandis que la sortie de la fibre optique (3) est reliée à un dispositif optique de focalisation (6) cylindrique du dispositif de balayage du faisceau laser.

2. Dispositif de tri laser à fibre optique selon la revendication 1, **caractérisé en ce qu'**il comprend deux ou plusieurs dispositifs (8) de lecture et de traitement des images, qui sont axés à la fois sur la lecture de la lumière laser (7) réfléchie et de la lumière laser traversant le matériau ainsi que sur la lecture dans différents domaines spectraux.

3. Dispositif de tri laser à fibre optique selon la revendication 1, **caractérisé en ce qu'**il comprend en outre des modulateurs de l'intensité de la lumière laser.

4. Dispositif de tri laser à fibre optique selon la revendication 1, **caractérisé en ce que** l'entrée de la fibre optique (3) est reliée aux sorties optiques d'un ou plusieurs lasers (4) par l'intermédiaire du dispositif optique de focalisation (5) et de prismes rotatifs (10).
